# EUROPEAN PATENT APPLICATION

(11) **EP 2 050 897 A2**
(43) Date of publication of application: **22.04.2009**
(21) Application number: 08381030.9
(22) Date of filing: 08.09.2008
(51) Int. Cl.: E04F 19/06, E04F 19/02

(54) **Attachment device for energy panels on building facades**

(30) Priority: 19.10.2007 ES 200702127 U
(71) Applicant: Bou & Gali, 12550 Almazora (ES)
(72) Inventor: Bou Castillo, Marino, 12550 Almazora (ES)
(74) Representative: Martin Santos, Victoria Sofia

(57) **Abstract**

Device for attaching energy panels to the façades of buildings, comprising at least one vertical body (1,25) and a group of horizontal supports (2). The body is provided with wings (21) having holes to fix it to the wall and is provided with a central web (22) being distanced from the wall and having holes to attach the horizontal supports. The horizontal supports have a support base (5) to be fixed the body's web (22) and upper and lower compartments (9,10) to receive the upper and lower edges of the panel (31), the support base (5) and the compartments (9,10) being distanced from each other. Additional H-shaped separators (4) separating adjacent panels by receiving their lateral edges can also be received in the compartments (9,10).

## Description

### OBJECT OF THE INVENTION

The purpose of the present invention is a device which permits a simple, easy and effective attachment of energy apparatus such as thermal tiles, made, for example, from ceramic or glass, which require a non ventilated installation which permits an intermediate non ventilated or slightly ventilated chamber to be created between the energy apparatus and said façade, thus providing optimum use of the energy provided or absorbed by said energy apparatus.

### BACKGROUND TO THE INVENTION

The construction of façades in buildings has been developed over time in order to provide inhabitants of the building with optimum comfort. Therefore, in small buildings, wood has been used, for example, as an insulating material. However, that material is not particularly durable and it requires greater maintenance than other types of construction.

Not long ago houses were built with a thick masonry walls (sometimes more than a metre thick) so that the wall had, on one hand a structural function in that it supported the roof, and additionally a thermal function which made use of solar heat preventing the cold night time temperature from penetrating the interior of the house and, in summer, it created the opposite effect in which although the wall heated up during the day, the effect of that heat was amortised by the cold accumulated (or heat lost) during the night.

Nevertheless, at the present time, the cost of building such walls is prohibitive as they take up a large area of land, which is expensive, and they also require a large amount of materials and extensive manpower. Furthermore, the thermal effect of these façades is not ideal, as there are currently other solutions which make better use of energy. Various thermal devices exist for this use of energy. Nevertheless, one of the problems raised is the difficulty of attaching them, as this requires a specific distance between these devices (such as thermal tiles) and the wall to which they are affixed.

There are devices for affixing parts to façades such as cladding parts, in which the purpose is simply to sustain them, and they are not provided with means by which the various interior spaces resulting from that anchoring are insulated and in short, those means of anchoring do not have any means for preventing ventilation which is an undesirable effect in respect of this invention. Anchoring of the apparatus described above is achieved by introducing an expansive screw into the façade of the anchoring device, and by means of hanging the parts from their corresponding supports, however this does not provide not a firm attachment.

### DESCRIPTION OF THE INVENTION

The present invention consists of an attachment device for energy apparatus in building façades which is easy to manufacture and set up, as it permits attachment to anchoring plates with plugless screws, and permits energy plates to be fitted without any additional apparatus and in a correct position, so that the attachment is achieved once the position has been reached.

The attachment device is characterised in that it comprises:
- At least one body for anchoring to a wall, or either each one of said anchors being provided with at least one and preferably two anchoring wings, with said anchoring being provided with means for attachment to the wall, such as holes for insertion of screws, with said anchoring consisting of a body separate from said wall, or either comprising a vertical concrete body.
- A group of horizontal supports, with said supports being provided with a separation in respect of their support base; and
- At least one compartment configured in said horizontal supports for attaching the upper or lower base of an energy apparatus, with said energy apparatus normally having prismatic form with low thickness.

The object of this invention is also the mounting procedure for the aforementioned attachment device, characterised in that, having fitted the energy apparatus, it is attached by means of a horizontal support, provided with at least a lower wedge or stop and if another energy apparatus is to be attached it is also provided with another one above. With the energy apparatus fitted in place, the upper horizontal support is attached by means of the corresponding screw attachments to the body for anchoring to a wall, normally situated in a perpendicular manner to said horizontal supports, which are thus arranged for placement of vertical separators and corner pieces, also vertical.

### DESCRIPTION OF THE DRAWINGS

The present descriptive report is complemented by a set of plans illustrating a preferred embodiment of the invention, but which is in no way restrictive.

Figure 1 shows a cross section view of a first part which comprises the attachment device of the invention for an example of an embodiment, in which the energy apparatus comprises thermal tiles of equal thickness.

Figure 2 shows a perspective view of the part in figure 1.

Figure 3 shows a cross section view of a second attachment part for the corner parts of the building, for an example of an embodiment in which the energy apparatus comprises thermal tiles of equal thickness.

Figure 4 shows a perspective view of a third part separating the energy apparatus.

Figure 5 shows a perspective view of a first example of the embodiment of an anchoring body attached to a wall for affixing and anchoring of the supports for the energy apparatus, which includes anchoring wings.

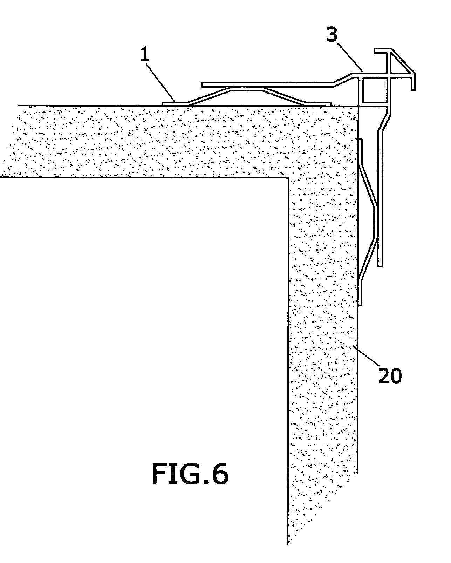

Figure 6 shows an upper cross section view of a corner of a building provided with a corner support of the energy apparatus according to figure 3.

Figure 7 shows a diagram perspective view of mounting of a group of parts of figures 1, 2, 4 and 5 supporting an energy apparatus.

Figure 8 shows a diagram in perspective view of mounting of a group of parts of figures 1, 2, and 4 together with a body for anchoring to a vertical concrete wall.

Figure 9 shows a cross section view of a first part which comprises the attachment device of the invention, for an example of an embodiment in which the energy apparatus comprises thermal tiles of different thickness.

Figure 10 shows a cross section view of a second part for attachment of the corner parts of the building for an example of an embodiment in which the energy apparatus comprises at least two types of thermal tiles of different thickness.

Figure 11 shows a cross section view of an additional horizontal part which comprises the attachment device of the invention for an example of an embodiment in which alternate rows are laid of thermal tiles with different thickness.

Figure 12 shows a cross section view of a vertical plane of the mounting of a group of parts of figures 9 and 11 sustaining a series of energy apparatus or thermal tiles which occupy different thicknesses.

### PREFERRED EMBODIMENT OF THE INVENTION

Therefore, an device is described for attaching energy apparatus to building façades which includes:
- At least one anchor for a wall, or either each one being provided with at least one, and preferably two anchoring wings, with said anchor being provided with means for attachment to the wall, such as holes for insertion of screws, with said anchor consisting of a body separate from said wall, or either comprising a vertical concrete body.
- A group of horizontal supports, with said supports being provided with a separation in respect of their support base; and
- At least one compartment configured in said horizontal supports for attaching the upper or lower base of an energy apparatus, with said energy appliance normally having prismatic form with low thickness; and
- A group of vertical separators for each pair of energy apparatus.

Furthermore, the anchoring device in the invention includes an attachment part which may be fixed to one or both faces of a corner either directly, or through an anchoring part, such as that described previously.

The horizontal supports preferably include an interior hollow or concavity which would be observed from the wall, providing an additional separation of the sustained energy apparatus, in such a way that the sum of the concavity of the horizontal support and that of the anchoring body provides adequate separation of the energy apparatus in respect to the wall on which they are fitted.

In this way, a group of anchoring bodies (1, 25) are situated and attached to a wall (20), arranged in an essentially parallel form and coinciding or not with the lateral ends of each one of the sets of energy apparatus.

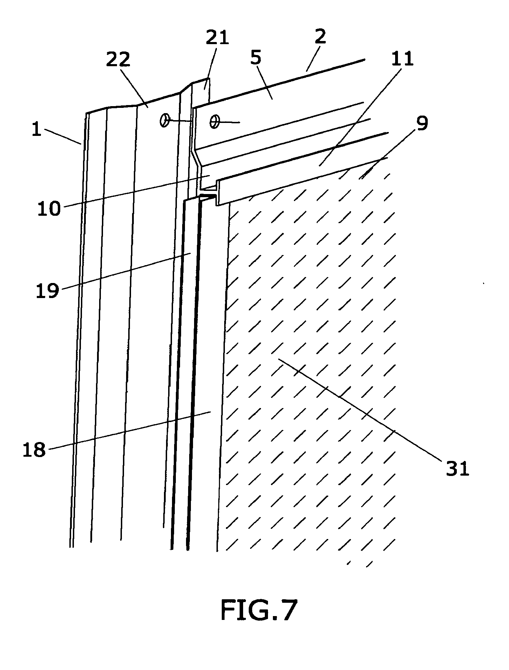

Figure 7 shows an example of an embodiment on which said anchoring body (1) is provided with at least one lateral attachment wing (21) or with the facility for making holes (24) in said wing for their anchoring on said wall. The attachment body (1) comprises an attachment surface (22) with horizontal supports (2) using plugless screws. Said surface (22) is adequately sized to include the screws for one or more said horizontal supports (2), and which comprise lateral surfaces (23) which separate said surface (22) from the wall (20).

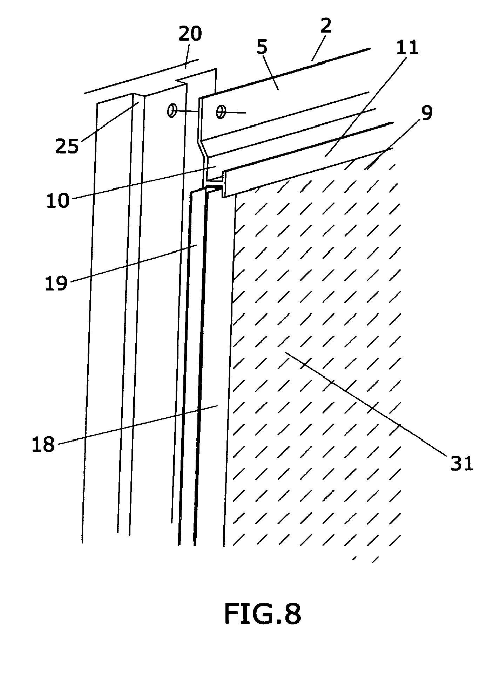

Figure 8 shows an example of an embodiment in which the anchoring body (25) comprises a vertical concrete body.

On said anchoring bodies (1, 25) horizontal supports (2) are arranged from the lower part, which will be fixed to these placing against the support surface (5) and providing screws through the holes (6) which shall be pre-formed or shall be made in situ, or by some other means.

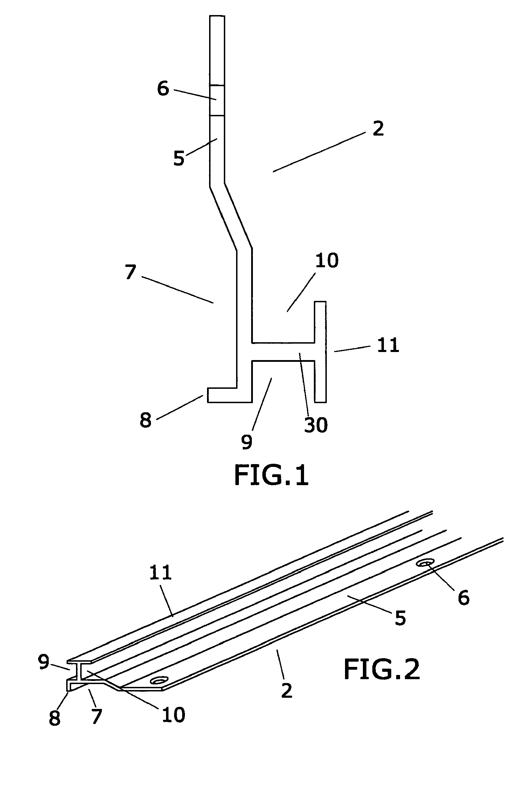

The horizontal supports (2) which are situated between said rows of energy apparatus (31) such as thermal tiles, as shown in figures 1, 2 and 9 , comprise a separation concavity (7) (seen from the wall,) formed at one end by the surface (5) and on the other by a support flap (8). Said horizontal supports (2) include a projection (30) emerging outwards which is provided at its end and visible surface (11) with an upper (10) or lower wedge (9) or stop, or both (9,10).

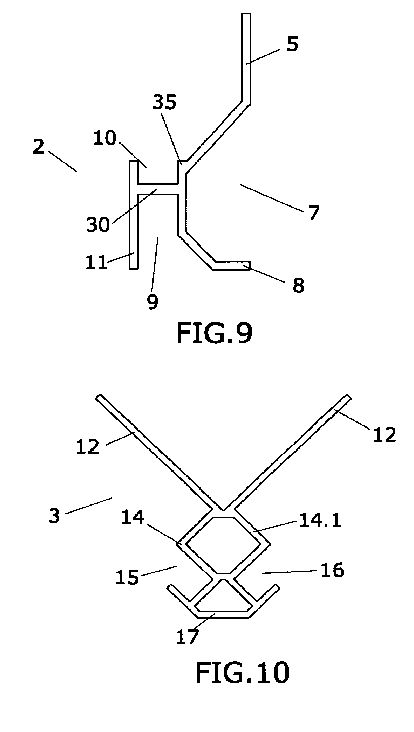

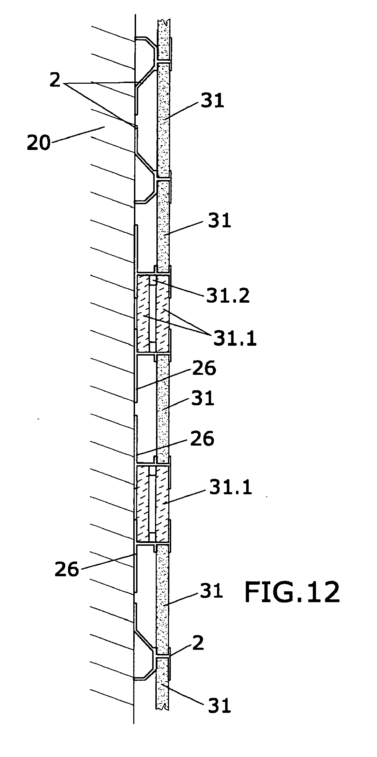

The horizontal support (2) corresponding to figure 9 is provided with a gap (7) of a greater depth than that corresponding to the horizontal support (2) of figure 1. This is so because in the case of figure 9, see also figure 12, the horizontal support (2) corresponds to the example in which, although it joins energy apparatus (31), such as thermal tiles, of equal thickness through the corresponding wedges or stops (9, 10) however, in those rows above or below these rows which are joined by the aforementioned horizontal support (2) there was at least one row of sets of energy apparatus which occupy a different thickness which may be formed by one or various thermal tiles (31), therefore the rest of the rows of energy apparatus (31) should present external surfaces aligned with those which occupy a greater thickness, so that those sets of energy apparatus (31) which take up less thickness will have a greater separation with respect to the wall (20), a function which is fulfilled, increasing the depth of the gap(7).

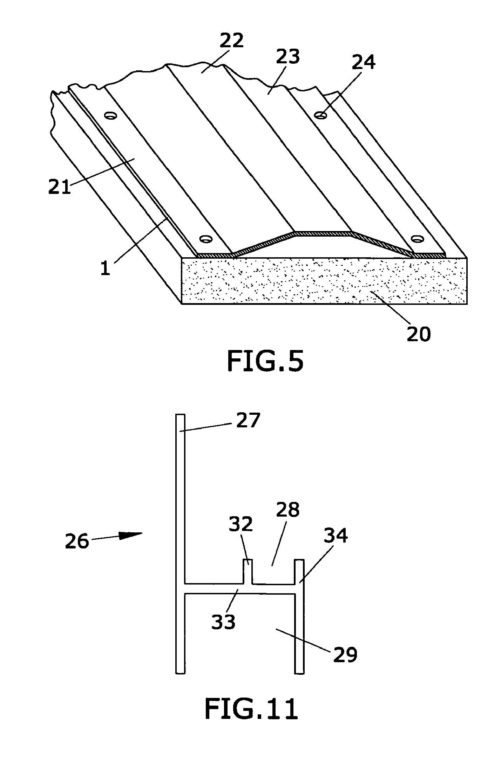

Figure 11, and see also figure 12, shows an additional horizontal support (26) designed to join the respective rows of energy apparatus (31) which occupy a different thickness. For this purpose a ceramic thermal tile (31) for example, is arranged, designed to occupy the upper external wedge or stop (28) and, for example, respective glass thermal tiles (31.1) which will jointly occupy the lower wedge or stop (29) and which could include separators (31.2) between them in order to provide an air chamber. With both glass thermal tiles (31.1) a curtain wall may be established which reduces the passage of solar light, as well as reducing the internal temperature, providing the structure with a feeling of lightness.

In this embodiment of the horizontal support (26) instead of a gap to distance the thermal tile (31) from the wall (20), there is an upper intermediate partition (32). The horizontal support (26) comprises a projection (33) emerging towards the exterior which forms its end and visible surface (34).

In addition, the horizontal support (2) corresponding to figure 9 comprises in its upper wedge or stop (10) a projection (35) for support of vertical separators (4).

The separators (4) consist of H-shaped parts which will also have a function as adornment or trim. The hollows (19) in those H-shaped parts will house a portion of the sides of the energy apparatus (31) with the external surface (18) remaining visible.

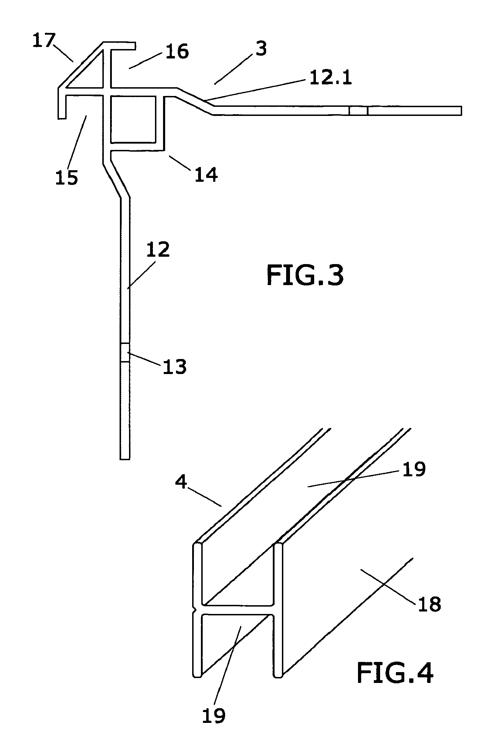

When a corner is reached, the corner parts (3), two of whose embodiments are represented in figures 3 and 10, are fitted, which, as well as serving as adornment in the crests, also function as attachments. In the same way as the horizontal supports (2), the corner parts (3) comprise projections (12) towards at least one of the sides of the corner and preferably towards two, preferably provided with a hole (13) for its attachment by means of screws to the corresponding anchor base (1, 25) and they define respective lateral compartments (15, 16) for arranging on these a portion of the energy apparatus (31). Between said lateral compartments (15, 16) a preferably bevelled edge is arranged (27), with said bevel configuring a surface for connection between the lateral compartments (15, 16) which carries out the functions of structural reinforcement and adornment surface. A support zone (14) in the corresponding corner and reinforcement of the part (3) has also been provided.

In order to separate the wall (20) from the thermal apparatus (31), the corner part (3) corresponding to figure 3 is provided with a stepping (12.1) in the lateral projections (12), whereas in the corner part (3) corresponding to figure 10 the lateral projections (12) are situated continuing from the support zone (14) and therefore its face perpendicular (14.1) to the projections (12) acts as a distancer. Furthermore, this perpendicular face (14.1) has a greater depth than the stepping (12.1) which would permit the corner part (3) to adapt to the fact of having used thermal tiles (31) which occupy different thicknesses.

Normally, prior to placing the following height of horizontal supports (2) and their corresponding energy apparatus (31), the separator profiles (4) will be placed between each pair of apparatus.

The corresponding parts may be made of any material, including, but without being a restrictive list, metals (steel, aluminium) and plastics (PVC, Nylon, Pa etc.).

It is applicable to devices for supporting energy apparatus on façades.

## Claims

1. Device for attaching energy apparatus to the façades of buildings, **characterised in that** it comprises:
• At least one body for anchoring to a wall (1. 25) or either each of these anchors being provided with at least one and preferably two anchoring wings (21), with said anchoring provided with means of attachment to the wall (20) such as holes (24) for inserting screws, with said anchor comprising a body (22) separated from said wall (20) or either, comprising at least one vertical concrete body (25).
• A group of horizontal supports (2) which said supports being provided with a separation (7) with respect to their support base; and
• At least one compartment (9, 10) formed by said horizontal supports (2) which may be attached to the upper or lower base of an energy apparatus (31), with said energy apparatus normally having a prismatic form with low thickness.

2. Attachment device for energy apparatus on building façades, according to claim 1, **characterised in that** the horizontal supports (2) additionally include a support surface (5) and attachment to the corresponding bodies for anchoring to the wall (1, 25).

3. Device for attachment of energy apparatus on building façades, according to either of claims 1 and 2, **characterised** because the horizontal supports (2) include in addition a support flap (8) on said bodies for anchoring to the wall (1, 25).

4. Attachment device for energy apparatus on building façades according to any of claims 1 to 3, **characterised in that** the horizontal supports (2) comprise an extension (30) carrying a sheet (30) which defines the upper (10) and/or lower (9) compartments and forms the external visible surface of said supports.

5. - Attachment device for energy apparatus in building façades, according to any of the previous claims, **characterised in that** it comprises an additional horizontal support (26) designed to join the respective rows of energy apparatus (31) which take up a different thickness which includes an upper external wedge or stop (28) for the insertion of at least one thermal tile (31) and a lower wedge or stop (29) for inserting one or more thermal tiles (31).

6. - Attachment device for energy apparatus on building façades according to claim 5, **characterised in that** the upper wedge or stop (28) comprises an intermediate partition for separating the thermal tile (31) of the wall (20).

7. Attachment device for energy apparatus on building façades according to any of claims 1 to 5 , **characterised in that** it also comprises a vertical separating part (4) between each pair of energy apparatus (31), with each vertical separating part (4) having an H-shape which defines compartments (19) and a visible external surface (18).

8. Attachment device for energy apparatus on building façades according to any of claims 1 to 4 and 7, **characterised in that** it comprises in addition a group of angular supports (3) which include respective support zones (12) for the corresponding anchoring bodies /1, 25) and lateral compartments (15, 16) for a lateral portion of the energy apparatus (31).

9. Attachment device for energy apparatus on building façades according to claim 8, **characterised in that** between the lateral compartments (15,16) and oriented towards the exterior, the angular supports (3) comprise a surface (17) connecting the two which also has the functions of protection and adornment.

10. - Procedure for mounting the attachment device for energy apparatus on building façades, according to claim 1, **characterised in that**, having fitted the energy apparatus (31), it is attached by means of a horizontal support (2) provided with at least one lower wedge or stop (9) and if another energy apparatus has to be fitted, also above (10) and with the energy apparatus fitted, the upper horizontal support (2)is attached by means of the corresponding screws attaching it to the body of the anchor (1, 25), normally situated in a perpendicular manner to said horizontal supports (2), being arranged so that vertical separators (4) and corner parts (3), which are also vertical may be fitted.

11. - Procedure for mounting the attachment device of energy apparatus on building façades, according to claim 10, **characterised in that** prior to fitting, the following height of horizontal supports (2) and their corresponding energy apparatus (31) separator profiles (4) are placed between each pair of apparatus sets.
